# EUROPÄISCHE PATENTSCHRIFT

(11) **EP 3 666 972 B1**
(45) Veröffentlichungstag und Bekanntmachung des Hinweises auf die Patenterteilung: **15.09.2021**
(21) Anmeldenummer: 19000516.5
(22) Anmeldetag: 12.11.2019
(51) Int. Cl.: D21J 3/00, B65D 65/46, D21J 3/10

(54) **VERFAHREN ZUR HERSTELLUNG EINES KOMPOSTIERBAREN BEHÄLTERS AUS PFLANZLICHEN LANDWIRTSCHAFTLICHEN ABFÄLLEN**
METHOD FOR PRODUCING A COMPOSTABLE CONTAINER MADE FROM VEGETABLE AGRICULTURAL WASTE
PROCÉDÉ DE FABRICATION D'UN RÉCIPIENT COMPOSTABLE À PARTIR DE DÉCHETS AGRICOLES VÉGÉTAUX

(30) Priorität: 11.12.2018 DE 102018009723
(43) Veröffentlichungstag der Anmeldung: 17.06.2020
(73) Patentinhaber: Cseri, Tilda, 82515 Wolfratshausen (DE)
(72) Erfinder: Cseri, Tilda, 82515 Wolfratshausen (DE)

(56) Entgegenhaltungen:
- WO-A1-2011/099837
- WO-A1-2015/011066
- US-A1- 2018 058 001

## Beschreibung

### Anwendungsgebiet

Die vorliegende Erfindung betrifft ein Verfahren zur Herstellung eines Bio-Einwegverpackungsmaterials sowie damit hergestellte Behälter.

Die Erfindung bezieht sich insbesondere auf Einwegverpackungen zur Verwendung mit frischen Gemüsen, Obst, Eiern und sonstigen diversen Konsumgütern vom Produzenten wie Gärtnereien, Landhöfen, Großhändlern bis zum Endverbraucher. Die erfindungsgemäß hergestellten Verpackungen dienen hierbei zur sicheren Lagerung, zum Transport und beim anschließenden Verkauf.

### Aktuelle Marktsituation ― Technologischer Hintergrund

Im oben beschriebenen Bereich der Lebensmittelindustrie verwendet man aktuell ca. 75% - 85% von ausschließlich auf Kunststoff basierenden Einwegverpackungen. 15% bis 25% der Verpackungsmaterialien bestehen aus Bio-Kunststoff, Altpapier oder Holzfasern.

Verpackungen anderer Non-Food-Produkte, z.B. von diversen Konsumgütern, Elektrogeräten usw. bestehen aus Kunststoff (ca. 45%), Altpapier (ca. 40%), Biokunststoff (10% ) und Agrarreststoffen (5%).

Im Bereich der Herstellung von kompostierbaren Verpackungen hat beispielsweise die Firma Zelfo Technology GmbH (2013 von BASF übernommen) zusammen mit Bio-Lutions Technology ein UP-Cycling Verfahren entwickelt, das zellulosehaltige Pflanzenabfälle aus der Landwirtschaft mittels einer Maschine zu feinen Faserstückchen zermahlt. Es entstehen sogenannte selbstbindende mikrofibrillierte Fasern, die sich selbst aneinander lagern. Durch Zusatz von Wasser entsteht ein Faserbrei, der sich in vielfältige Formen pressen lässt.

Die Fa. Papacks in Köln verwendet auch Agrarabfälle und Altpapierzellstoffe zu bestimmten Verpackungsmaterialien. Hier wird hauptsächlich die klassische Fasergusstechnologie verwendet und gleichzeitig ist die Technologie von Zelfo auch leicht erkennbar.

Die holländische Firma Synprodo produziert einen Hartschaum namens "BioFoam", ein biobasierter Schaumwerkstoff (z.B. wie Bio-Styropor).

Die DE 60313679 T2 der Fa. New Ice Ltd./GB zeigt auch ein Verfahren und Rezept in diversen Ausführungsformen von 5 Hauptkomponenten, wie vorgelierte Stärkesuspensionen aus Mais- und Kartoffelstärke, Holzmehl von Papierzellstoff mit anschließender " PROTECoat"- oder ähnlicher flüssigkeitsbeständiger Beschichtung. Hier wird Druck in Kombination mit Wärme zur Formung eines bioabbaubaren Behälters angewendet.

In der DE102012111235B3 und DE102015116119A1 wird ein Verfahren zur Herstellung eines Laminats beschrieben, das ein oder mehrere Pflanzenblätter, Klebstoff und Verbindungsschichten mit z.B. einer polyhydroxycarbonsäurehaltigen Biokunststofffolie beinhaltet. Das Hauptprofil der Firma zeigt sich hauptsächlich in der Herstellung von "Einweggeschirr umfassend ein Laminat".

In der DE102016107654A1 der Fa. SPC Sunflower Plastic Compound GmbH wird ein Verfahren zur Herstellung eines Spritzgussproduktes offenbart, das auf compundiertem Material und Sonnenblumenkernschalen/-hülsen basiert. Anschließend werden damit biologisch-abbaubare Kunststoffprodukte wie Behälter, Blumentöpfe, Kaffeekapseln usw. produziert.

In der US 2018/0100272 A1 wird ein Verfahren zur Herstellung von Formartikeln aus chinesischen Kräuterresten sowie daraus hergestellte Formartikel offenbart. Hierbei werden die chinesischen Kräuterrückstände zerkleinert und es wird unter Zugabe von Wasser eine Lösung hergestellt. Diese Lösung wird weiter bearbeitet, um einen Brei zu erhalten, der dann geformt, getrocknet und heiß gepresst wird, um einen geformten Artikel zu erzeugen.

Die WO 2013/141687 beschreibt eine biologisch abbaubare und/oder kompostierbare Zellstoffzusammensetzung, geformte Zellstoffartikel und Verfahren zu deren Herstellung. Die Zellstoffzusammensetzung wird aus nichthölzernen Fasern mit Durchmessern von 2,5 bis 10 µm hergestellt. Die Zellstoffzusammensetzung kann ferner mindestens eine exogene Protease enthalten. Die Zellstoffzusammensetzung kann zu mindestens einem geformten Zellstoffartikel geformt werden.

In der WO 2011/099837 wird ein Verfahren zur Herstellung von 100% biologisch abbaubaren, geformten Produkten offenbart. Der Prozess beinhaltet die Verwendung von Materialien wie Stärke und Maisabfälle wie Maiskolben, Maisstamm, Maiswurzeln und Maisblätter. Dementsprechend werden die Maisabfälle zu Pulver verarbeitet und in einem bestimmten Verhältnis mit Wasser und Stärke vermischt, um ein Zellstoffgemisch herzustellen. Das Gemisch wird dann in die gewünschte Form von Produkten geformt.

Die bisher bekannten Technologien weisen die folgenden Nachteile bei der Herstellung von kompostierbaren Bio-Einwegschalen auf:
1. Sie zeigen eine niedrige Wirtschaftlichkeit für obige Zielanwendung wie z.B.:
   a.) Die Herstellungsprozesse benötigen zunächst sehr hohe Investitionsgüter und teure Anlagen und Maschinen.
   b.) Die bisher bekannten biologisch kompostierbaren Materialien sind komplex in ihrer Herstellung, denn bei ihrer Verarbeitung wird eine relativ lange Maschinenzykluszeit und ein hoher Energieverbrauch benötigt. Die Maßnahmen, um bestimmte physikalische Eigenschaften wie Festigkeit, Sprödigkeit, hydrophile - und hydrophobe Eigenschaften optimal einzustellen, bedarf höchster Präzision.

Weiterhin ist die Herstellung der bisher bekannten Bio-Werkstoffe/-materialien meistens nur auf bestimmte Rohmaterialien und Ressourcen beschränkt. Dies hängt von mehreren einzelnen Komponenten ab.

So zeigt das Endprodukt eines bisher bekannten Bio-Kunststoffes zwar ein vollkommenes Design, das aber für das vorliegende Hauptanwendungsgebiet der Bio-Einwegverpackung weder notwendig noch rentabel ist.

Auch entsprechen die Ressourcen- und die Herstellungsorte nicht dem Absatzort.

In Europa sind z.B. die bisher bekannten Bio- kompostierbaren Einwegverpackungen, außer Papier und Holz, immer noch viel zu wenig in den Supermärkten verbreitet. Die Sammlung und Logistik von bestimmten grünen Agrarreststoffen sind immer noch zu aufwändig für die bisher bekannte Verpackungsindustrie.

Auch sind die bisher bekannten Bio-Kunststofffolien und Bio-Werkstoffprodukte oft nur nach mehr als 24 Tagen bzw. 6 Monaten kompostierbar. Sie sind meistens nur in den Kompostieranlagen oder in den speziellen Industrieanlagen biologisch abbaubar.

Schließlich sind die bei den bekannten Verfahren verwendeten Bindemittel wie Kartoffel- und Maisstärke nachteilhaft. Sie sind relativ teuer, nicht hinreichend elastisch und weisen keine optimalen Ergebnisse in Bezug auf Kompression und Wasserbeeinflussung auf; z.B. imprägnieren diese Bindemittel die Pflanzenmasse nicht wirklich. Das Gelmaterial ist weiterhin an die äußere Oberfläche des verwendeten Materials gebunden. Diese Stärke (pflanzliche Gelatine) ist nach dem Trocknen üblicherweise grobkörnig, hart und bröselig.

Der vorliegenden Erfindung liegt die Aufgabe zugrunde, eine kompostierbare Bio-Einwegverpackung für Obst und Gemüse einfacher und kostengünstiger zu gestalten. Die Wirtschaftlichkeit ist insbesonders durch folgende Merkmale gekennzeichnet:
1. Der Herstellungsprozess und die hierbei verwendete Technologie ist einfach.
2. Die kostengünstigste Herstellung kann in unmittelbarer Nähe der Produktionsstätte der Ausgangsstoffe stattfinden wie z.B. in der EU, wo es überall Landwirtschaft gibt.
3. Der Produktionsprozess benötigt wenig Energie und Wasser. Der Energieverbrauch kann je nach Saison optimal angepasst werden (z.B. im Sommer das Trocknen nach draußen verlagern).
4. In den saisonalen Pflanzenabfällen (ausgenommen Tierfutter) befinden sich in einem breiten Spektrum zellulosehaltige Pflanzenreste und Abfälle aus der Agrarwirtschaft.
5. Nach dem Verbrauch der Schalen und Behälter sind diese auf natürliche Weise zu 100% kompostierbar. Innerhalb von 24 Tagen zeigt sich bereits ein schneller Abbau und die Rückführung in die Natur. Es werden keine speziellen, teuren Industrie- oder Kompostieranlagen für die Gärung benötigt, sondern die erfindungsgemäß hergestellten Verpackungen sind auch in Privatanlagen vollkommen kompostierbar.
6. Der Ausstoßwert von CO2 ist bei der Verbrennung sehr niedrig.
7. Der Absatzmarkt ist auf der ganzen Welt sehr groß. Aktuell besteht ein großer Bedarf an kostengünstigeren, einfacheren, kompostierbaren und biologisch abbaubaren Einwegverpackungen für das oben definierte Anwendungsgebiet.

### Darstellung der Erfindung

Die erfindungsgemäße kompostierbare Bio-Einwegverpackung ist insbesondere für Obst-und Gemüseschalen dadurch gekennzeichnet, dass sie aus folgenden Komponenten besteht:
1. Diverse grüne, frische und faserige Nutzpflanzen (z.B. Nutzhanf, Mais, Stroh, Sonnenblumen, Grünreste von Getreiden) und Agrarresten, die nach dem Ernten von Gemüsen vorhanden sind (z.B. Stiele und Blätter von Paprika, Gurken, Tomaten, Kartoffeln, Hülsenfrüchten, Melonen, Kürbissen etc.) sowie alle Gräser und Unkraut (z.B. Ambrosien).
2. Stark glutenhaltigem Mehlkleister, den man unter Verwendung von Getreiden wie Weizen, Durumweizen, Dinkel, Gerste, Roggen, Vollkornmehlschroten (am besten geeignet sind z.B. Typen von ca. 800 bis 1150) bei der Mehlverarbeitung erhaltenen "Mehlen" durch Versetzen mit Wasser oder einem sonstigen Lösungsmittel, erhält.

Das erfindungsgemäße Verfahren zur Herstellung eines kompostierbaren Behälters umfasst die folgenden Schritte:
a) Zerkleinerung pflanzlicher Abfälle,
b) Versetzen der zerkleinerten Abfälle mit Wasser,
c) Erhitzen des Gemisches zum Erhalten eines Pflanzenbreis,
d) Einbringen des Pflanzenbreis in ein Formwerkzeug,
e) Formpressen des Pflanzenbreis zum Erhalten eines Behälterformlings,
f) Flächiges Auftragen eines flüssigen Mehlkleisters auf der innenliegenden Seite des Behälterformlings,
g) Erneutes Formpressen des mit der Mehlkleisterschicht überzogenen Behälterformlings,
h) Trocknen des Behälterformlings und der Mehlkleisterschicht.

Nach der Vermischung eines wässerigen und hitzebehandelten Pflanzenbreis aus den oben unter 1. genannten Ausgangsmaterialien erfolgt ein Pressprozess durch ein Formwerkzeug; z.B. zwei Siebe (bei Raumtemperatur), wobei dem Brei ein Anteil seines Wassergehalts entzogen wird und vorzugsweise gleichzeitig die Formgebung für den Einwegbehälter stattfindet. Danach wird auf die innenliegende Oberfläche des auf diese Weise erhaltenen Behälterformlings der stark haftende, wässrige, stark glutenhaltige Mehlkleister kalt aufgetragen. Anschließend wird die Schichtanordnung nochmal gepresst. Es handelt sich folglich um eine Art "Sandwich"-Verfahren.

Man kann eine weitere Schicht mit einem anderen Material auftragen und den Pressprozess wiederholen. Der Mehlkleister hat eine besonders gute Haftung zu den verschiedenen trockenen, öligen, fettigen, wässerigen, glatten und groben Materialien wie Pflanzen, Bio-Folien usw.

Dieser Mehlkleister bietet somit eine feste und relativ elastische Haftung zu diversen Oberflächen wie zu gemahlenem Pflanzenbrei und Pflanzenfasern. Auch bei Raumtemperatur dringt er teilweise gut in die Faserschichten ein.

Der besondere Vorteil dieses Mehlkleisters ist, dass er keine perfekte und glatte Oberfläche zwischen den Schichten benötigt, um gut zu haften.

Auch zwischen groben Schichtflächen zeigt sich bei der erfindungsgemäßen Verwendung des Mehlkleisters eine feste Haftung und Imprägnation. Die bisher bekannten vorgelierten Gelsuspensionen zeigen eher eine Tendenz zur Blasenbildung, z.B. wenn die Schichten von Pflanzenblättern inhomogene Oberflächen vorweisen.

Die weitere Beschichtung der innenliegenden Oberfläche des in Form gebrachten Behälterformlings kann beliebig nach den Ressourcen und nach dem Zweck ausgewählt werden: z.B. für feuchte, weniger feuchte oder für trockene Produkte wasserabweisendes (Alt)-Papier, Stroh oder/und Biokunststofffolie.

### Detaillierte Beschreibung des Verfahrens:

### Schritte a), b) und c) Verarbeitung. Zerkleinerung und Aufkochen des Rohmaterials zum Erhalten eines Pflanzenbreis

### Schritt a)

Das frische und ggf. grüne Rohmaterial wird zerkleinert. Die Teilgröße liegt im Bereich von 1 - 5 mm. Wenn das Rohmaterial kaum faseriges und hartes Material beinhaltet, dann kann die Teilgröße auch etwas größer sein.
1. Wenn das grüne Rohmaterial eher weich und faserarm ist, gibt man zerkleinerte bzw. gemahlene Zusätze (trockenes Getreide wie Kleie, Stroh, trockene Mühlreste, Maisblätter oder -stängel) im Volumenverhältnis 1: 6. bis 1:20 zu dieser heißen Masse hinzu. Man fügt erst die additiven Materialien zu und anschließend vermischt man die grüne /frische Pflanzenmasse.
2. Falls die Rohstoffe reich an Ballaststoffen wie Gräser, Paprika- und Tomatenstiele / -blätter, Maisstiele / -blätter oder an weiteren Faser- /Stängel-Sprossen / -abfällen sind, sollte man diese trockenen Zusätze im Volumenverhältnis 1:10 oder 1:15 (Pflanzenbrei : trockene Zusätze) verwenden. Die additiven Materialien kann man in diesem Fall weglassen.
3. Wenn das frische Pflanzenmaterial zu stark riecht, kann es beispielsweise mit einer einfachen handelsüblichen Zitronensäure verarbeitet werden. Volumenverhältnis: zu 1000 g wasserfreie Frischmasse 5 g Zitronensäure geben.

### Schritte b) und c)

Das Verhältnis von Wasser zu Pflanzenresten beträgt ca. 1: 2 bis 1: 3 Volumenverhältnis. Die Wassermenge ist abhängig vom Fasergehalt des Rohstoffes. Für eine genaue Festlegung des Verhältnisses muss man die Beschaffenheit der Ressourcen berücksichtigen.

Das Erhitzen erfolgt vorzugsweise durch ein Aufkochen für circa 5 ― 10 Minuten.

### Schritte d) und e) Pressprozess

Der Pressprozess in einem Formwerkzeug wird vorzugsweise bei Raumtemperatur durchgeführt.

Die berechnete Menge vom Pflanzenbrei wird in das Formwerkzeug, beispielsweise Sieb1(+) und Sieb2 (-)gegeben, und einem Pressvorgang unterzogen. Die Pressstärke wird durch den mechanischen Druck bestimmt. Die beim Pressen aus dem Pflanzenbrei austretende, überschüssige Flüssigkeit wird abgeleitet.

Der verpresste Behälterformling kann nach dem Pressen zunächst im Formwerkzeug (Sieb1(+)) verbleiben, wobei jedoch eine Formhälfte (das obere Sieb 2(-)) geöffnet wird. Nach dem ersten Pressen kann die Wanddicke des Behälterformlings etwa 2 bis 3 mm sein. Im Anschluss kann vorzugsweise der verpresste Behälterformling für ca. 1 Minute kurz mit Heißluft getrocknet werden.

### Schritt f) Aufbringen des Mehlkleisters

Der Mehlkleister wird nun auf die Innenseite des Behälterformlings flächig aufgebracht, bzw. gleichmäßig aufgesprüht und der Formling im Anschluss daran erneut im Formwerkzeug gepresst. Die Beschichtung mit dem Mehlkleister sollte nach dem Pressprozess ca.1 mm dick sein.

Das Volumenverhältnis des Klebers beträgt vorzugsweise 3 : 1 oder 2 : 1 (trockenes Getreidemehl, reich an Gluten : kaltes Leitungswasser).

Der stark glutenhaltige und wässerige Mehlkleister sichert die Elastizität und die Stabilität des "Klebstoffes". Die Viskosität des Mehlkleisters hängt von der Art des "grünen" Pflanzenmaterials als Rohstoff ab.

Der Klebstoff /Mehlkleister/Kleber kennzeichnet sich durch folgende Bestandteile:
Als Mehlanteil kann handelsübliches Getreidemehl verwendet werden, solange es einen hinreichend hohen Glutengehalt aufweist.

Die Lebensmittelindustrie verwendet meistens hoch glutenhaltiges und gemahlenes Getreidemehl (Typ 405 bis 1150). Je höher die Typenzahl, desto mehr Gluten beinhaltet das Mehl.

Normalerweise hat ein derartiges Mehl folgende Glutenwerte/-anteile:
Weizen: 8 ― 10,5%, Gerste und Hartweizen: 9 ― 11%, Durumweizen: 17%

Weitere Getreide mit Glutenanteil sind Roggen, Dinkel und Hafer.

Anstelle von handelsüblichem Getreidemehl können für den erfindungsgemäßen Mehlkleister auch Getreidemehlreste und diverse Vollkornmehlschroten verwendet werden, die beispielsweise als Abfallprodukte von Großgetreidemühlen (Mehlhersteller) kostengünstig bezogen werden können.

Es können Antifungine bzw. antimykotische Mittel (gegen Schimmelpilze und Bakterizide) wie z.B. Lebensmittelkonservierungsmittel in das gesamte Bindemittel des Mehlkleisters eingebracht werden. Hierbei kann es sich um E331 Natriumcitrat im vordosierten Verhältnis 1: 800 oder 1:1000 Volumenverhältnis (ca. 0,1 mg Natriumcitrat-Dihydrat pro 1 kg wässrige Masse) handeln.

### Schritt g): Erneutes Pressen

Danach wird der Formling zum zweiten Mal in dem Formwerkzeug gepresst. Das Bindemittel in Form des Mehlkleisters dringt einerseits in die breiige Masse des Behälterformlings ein und bildet andererseits eine gleichmäßige Schicht auf der inneren Oberfläche des Formlings. Diese Schicht haftet vor dem Trocknen sehr stark.

Nachfolgend kann man in einer bevorzugten Ausführungsform diese durch Aufbringen des Mehlkleisters erhaltene und haftende Innenschicht noch mit folgenden Zusatzmaterialien als Trennmaterial beschichten:
a) eine wasserabweisende Papierschicht (z.B. fetthaltiges, poröses Öko-, Fettpapier oder Ölpapiere) als zweite Innenschicht auftragen und verpressen.

Weitere pflanzliche Zusätze wie:
b) trockene Späne/Stroh, die auf 0,5 bis 2 cm zugeschnitten und dann verpresst werden, oder
c) grob verarbeitetes Strohpapier, das aufgetragen und verpresst wird,
   oder
d) trockene Rinde / Getreidefaser, die aufgetragen und gepresst wird,
   oder
e) Maisstängel, die schwammiges festes Material enthalten. Wenn die Technologie und die Menge der Maisstängel zur Verfügung gestellt sind, kann man eine grobkörnige (etwa 1 cm) oder längsweise gespaltene (1- 2 cm) Schaumschicht aus Maisstängel auf den Mehlkleister aufbringen und nachfolgend komprimieren, was zu einer hohen Absorptionseigenschaft führt.

Aufgrund der starken Bindeeigenschaft der Mehlkleisterschicht haften diese Trennmaterialien problemlos auf der Innenseite des Formlings.

### Schritt h): Trocknen

Nach dem zweiten Pressvorgang öffnet man das Werkzeug (Sieb 2). Der Behälterformling bleibt vorzugsweise in einer Hälfte des Formwerkzeugs, z.B. im Sieb 1, und wird mit heißer Luft bei ca. 60 - 85°C für ca. 10 -15 Minuten getrocknet. Nach dem Trocknen wird der Formling aus dem Formwerkzeug entfernt.

Vorzugsweise wird dann die äußere Oberfläche des Formlings mit einer verdünnten Variante des Mehlkleisters (Verhältnis Wasser: Kleisterpulver ist z.B. 1:1) beschichtet.

Insbesondere für die außenliegende Oberfläche der Verpackung könnte man noch wasserlösliche Lebensmittelfarbe zu der wässerigen Kleistermasse hinzufügen. Das Volumenverhältnis kann hierbei je nach gewünschter Farbintensität: 1:500 bis 1: 1000 betragen. Es kann allgemein grüne Farbe verwendet werden. Alternativ kann die Farbe für die außenliegende Oberfläche gezielt nach dem konkreten Verwendungszweck des Behälters ausgesucht werden, z.B. grün für Gurken, Zucchini oder rot für Rote Bete, Tomaten, oder orange, gelb, blau usw.

Das Beschichten kann beispielsweise durch ein vorzugsweise gleichmäßiges Aufsprühen des Mehlkleisters erfolgen. Eine Beschichtung der Außenseite des Formlings führt zu einer erhöhten Stabilität und Bindung der Pflanzenteile in dem verarbeiteten Brei. Der ästhetische Eindruck des Behälters kann auch verbessert werden.

Im Folgenden werden einige Sonderfälle beschrieben, die ein spezielles Vorgehen bei der Anwendung des erfindungsgemäßen Verfahrens erfordern.
1) Wenn der grüne und frische Pflanzenabfall nicht sofort oder innerhalb kurzer Zeit verarbeitet werden kann, dann lagert man das Rohmaterial an einem trockenen Ort, zumindest im zermahlenen/ zerhackten Zustand. Das Material muss hierbei vor Schimmel geschützt werden. Die grundsätzlichen Verfahrensschritte des erfindungsgemäßen Verfahrens bleiben unverändert. Allerdings benötigt man etwas mehr Wasser und Zeit zum Kochen, um eine geeignete Konsistenz des Pflanzenbreis zu erhalten.
2) Wenn das Rohmaterial in seinem ursprünglichen Zustand getrocknet wurde (nicht verschimmelt!), sollte es zerkleinert /gemahlen und gekocht werden. Auch hier lässt man das Material ein paar Minuten in heißem Wasser.
3). Wenn das grüne Rohmaterial Holz, Sperrholz und ähnliches hartes faseriges Material enthält, müssen diese entfernt bzw. bis zum Mehlzustand gemahlen werden. Danach wird dieses Fasermaterial für ungefähr 10 bis 15 Minuten in heißem Wasser aufgekocht und dann dem üblicherweise verwendeten Ausgangsmaterial hinzugefügt.

Es sind keine weiteren Zusätze erforderlich.
4) Wenn Altpapier zur Verfügung steht oder nur wenig "grünes" Rohmaterial aus Pflanzenabfällen, dann sind folgende Maßnahme zu beachten: Das Papier wird bei Raumtemperatur sehr fein gehackt und mit Wasser versetzt, beispielsweise in einem Volumenverhältnis Wasser: Papier von 2 : 1. Der Anteil an "grünem" Pflanzenabfall wird wie oben beschrieben auf die herkömmliche Weise zu Brei verarbeitet.

Nach dem Abkühlen wird der Pflanzenbrei mit der Papiermasse gut vermischt.

Diese Mischmasse wird ebenfalls in zwei Schritten extrahiert/gepresst.

Die Zellulosefaser des Papiers bindet sich nicht wirklich an den Pflanzenbrei, aber mit dem Mehlkleister ergibt sich eine ausgezeichnete Stabilität für die Form.

Wenn Bedarf für einen Behälter (Truhe, Kiste, Box) mit einer höheren Stabilität besteht, geht man wie folgt vor:
1) die erste Schicht ("grüner" Brei und Papiermischung) kann dicker als 3 bis 4 mm sein und in dieser Kombination wird auch das Bindemittel verwendet.
2) Es kann in mehreren Schichten gepresst werden, das heißt, nach der ersten Bindung ist es möglich, erneut grünes Material aufzutragen und zu pressen. Danach wieder den Kleister auftragen und ein drittes Mal pressen. Man kann somit mehrere Schichten wie beim Sandwich auftragen. Mit diesem Verfahren kann eine sehr stabile Kiste hergestellt werden.

### Ausführungsbeispiel

Die vorliegende Erfindung wird anhand eines Ausführungsbeispiels und unter Bezugnahme auf die Zeichnungen nachstehend erläutert:
Fig. 1a: Eine schematische Ansicht eines Formwerkzeugs zur Verwendung in dem erfindungsgemäßen Verfahren in Form zweier Siebe.
Fig. 1b: Schnitt durch ein Sieb aus Figur 1 entlang der Linie A-A.
Fig. 2: Schnittdarstellung des mit dem erfindungsgemäß verwendeten Pflanzenbrei gefüllten unteren Formwerkzeugs.
Fig. 3: Schnittdarstellung des geöffneten Formwerkzeugs nach dem ersten Pressvorgang.
Fig. 4a: Schnittdarstellung des geöffneten Formwerkzeugs nach dem zweiten Pressvorgang.
Fig. 4b: Schnitt durch das Sieb und des darin enthaltenen Behälterformlings aus Figur 4 entlang der Linie B-B.
Fig. 5: Schnitt durch einen Behälterformling aus Figur 4 entlang der Linie B-B mit einer auf dessen Innenseite und Außenseite jeweils aufgebrachten zusätzlichen Schicht.

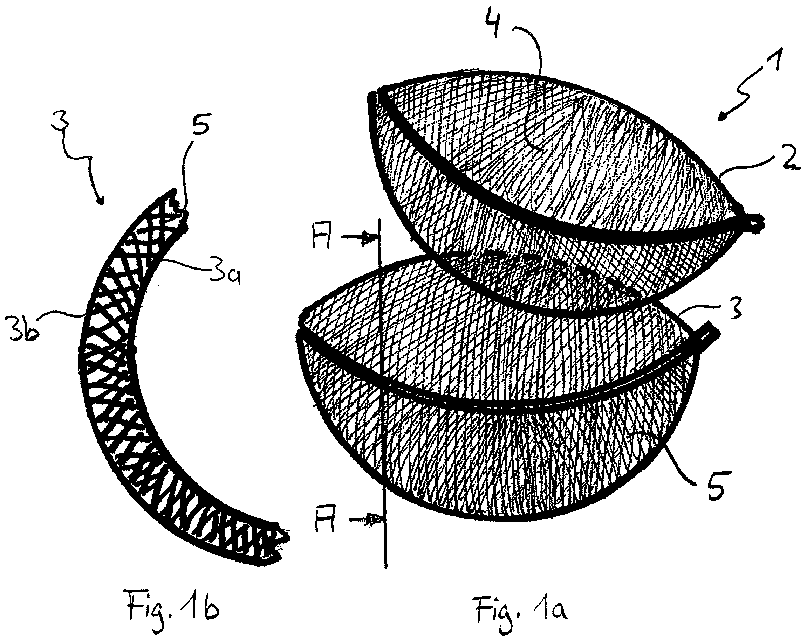

Figur 1a zeigt ein in dem erfindungsgemäßen Verfahren verwendetes Formwerkzeug 1, das in der dargestellten Ausführungsform aus zwei Sieben 2, 3 besteht. Die Siebe 2, 3 haben eine im Wesentlichen halbkugelförmige und identische Form. Folglich sind die Siebe 2, 3 von ihrer Größe derart beschaffen, dass das als oberes Formwerkzeug dienende Sieb 2 in das als unteres Formwerkzeug dienende Sieb 3 eingebracht werden kann, um eine zwischen den Sieben eingebrachte Breimasse zu pressen.

Es ist offensichtlich, dass das im erfindungsgemäßen Verfahren verwendete Formwerkzeug je nach der erwünschten Endform des kompostierbaren Behälters eine beliebige Form annehmen kann. Allerdings muss gewährleistet sein, dass das beim Pressen des Pflanzenbreis freiwerdende Wasser aus dem Formwerkzeug abgeführt werden kann.

Im in Figur 1 dargestellten Beispiel ermöglichen die Sieböffnungen 4, 5 einen Durchtritt von Wasser durch die Siebe 2 und 3, wobei die Größe der Sieböffnungen 4, 5 so zu wählen ist, dass die pflanzlichen Bestandteile des Breis in der Form verbleiben.

Figur 1b zeigt schematisch einen Schnitt durch das untere Sieb 3 entlang der in Figur 1a dargestellten Line A-A, mit der Innenseite 3a und der Außenseite 3b des Siebes 3.

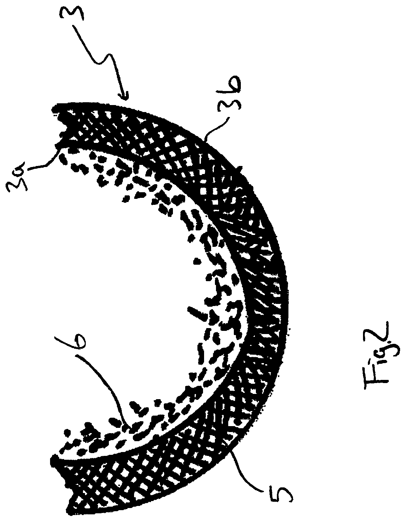

In Figur 2 ist ebenfalls das untere Sieb 3 in schematischer Schnittdarstellung gezeigt. Hierbei wurde der erfindungsgemäß zubereitete Pflanzenbrei 6 auf die Innenseite 3a des Siebes aufgebracht.

Im Anschluss erfolgt nun der erste Pressvorgang, indem das obere Sieb 2 von oben in das untere Sieb 3 eingeführt wird, so das der sich zwischen der Außenseite 2b des oberen Siebes 2 und der Innenseite 3a des unteren Siebs 3 angeordnete Pflanzenbrei 6 zur Bildung eines Behälterformlings 7 in die Halbkugelform der Siebe 2 und 3 verpresst wird. Der Anpressdruck zwischen den beiden Sieben 2 und 3 hängt hierbei unter anderem vom Wassergehalt des Breis 6, dessen Konsistenz sowie der für den Behälterformling 7 gewünschten Dicke ab. Das beim Pressen aus dem Brei 6 austretende Wasser kann durch die Sieböffnungen 5 im unteren Sieb 3 austreten.

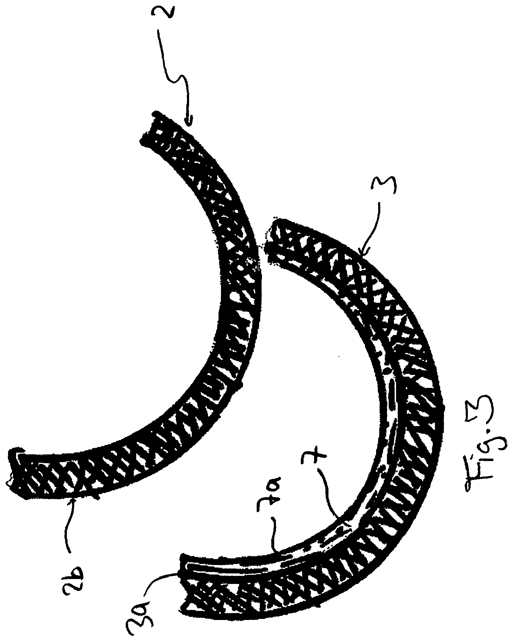

Nach dem ersten Pressvorgang wird das obere Sieb 2, wie in Figur 3 dargestellt nach oben abgehoben, wobei der durch das Pressen aus dem Brei 6 entstandene Behälterformling 7 auf der Innenseite 3a des unteren Siebs 3 verbleibt.

In dem dargestellten Ausführungsbeispiel wird nun die Innenseite 7a des Formlings 7 kurz mit Heißluft angetrocknet.

Als nächster Schritt wird auf die Innenseite 7a des Formlings 7 erfindungsgemäß eine Kleisterschicht 8 des Mehlkleisters aufgebracht. Diese Schicht 8 sollte vorzugsweise eine gleichmäßige Dicke aufweisen und kann gegebenenfalls durch ein Aufsprühen des wässrigen Klebers erfolgen.

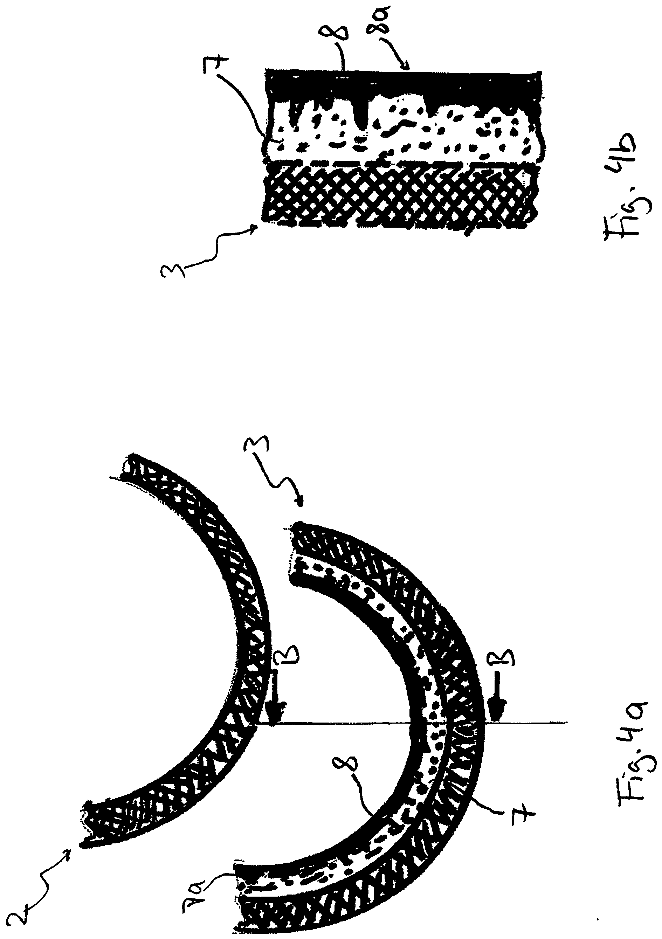

Anschließend wird das Formwerkzeug 1 für den zweiten Pressvorgang wieder geschlossen, indem das obere Sieb 2 erneut in das untere Sieb 3 eingebracht und dann die beiden Siebe 2, 3 mit dem Pressdruck beaufschlagt werden. Nach erfolgtem Pressen wird erneut das obere Sieb 2 angehoben und der nun auf seiner Innenseite 7a mit einer Kleisterschicht 8 überzogene Formling 7 verbleibt in dem unteren Sieb 3, wie in Figur 4a dargestellt..

Figur 4b zeigt schematisch einen Schnitt durch das Sieb 3 und den darin enthaltenen Formling 7 mit Schicht 8 entlang der Linie B-B in Figur 4a. Aufgrund der Konsistenz des erfindungsgemäßen Mehlkleisters kann dieser durch den zweiten Pressvorgang in die unregelmäßige Oberflächenstruktur auf der Innenseite 7a des Formlings 7 eindringen und eine stark haftende Verbindung der Schicht 8 mit dem Formling 7 bewirken. Auch wird hierdurch aus der unregelmäßigen Innenfläche 7a des Formlings eine gleichmäßige Oberfläche der Außenseite 8a der Schicht 8 erzeugt.

Erfindungsgemäß wird nun der in dem unteren Sieb 3 befindliche Formling 7 mit Schicht 8 zumindest teilweise getrocknet und dann aus dem Sieb 2 entfernt. Das Trocknen kann beispielsweise mit Heißluft erfolgen. Alternativ kann die Trocknung auch ohne äußere Energiezufuhr über einen längeren Zeitraum durch die Umgebungstemperatur erfolgen.

Um zum einen eine gleichmäßige Außenseite 7b des Formlings 7 zu erhalten und zum anderen ein Lösen von Pflanzenteilen aus dem Formling 7 zu vermeiden, wird die Außenseite 7b des Formlings in der dargestellten Ausführungsform ebenfalls mit einer Schicht 9 der erfindungsgemäßen Mehlkleisters überzogen. Diese Schicht 9 wird verzugsweise aufgesprüht und weist eine deutlich geringere Dicke auf als die der Innenseite 7a des Formlings 7 aufgebrachte Schicht 8. Anschließend wird der Formling 7 mit der zusätzlichen Schicht 9 noch einmal vollständig getrocknet, vorzugsweise unter Zuführung von Heißluft.

Weiterhin wird in dem dargestellten Beispiel des erfindungsgemäßen Verfahrens auch auf der Innenseite 7a des Formlings 7, d.h. auf der Schicht 8, eine weitere Schicht 10 aus wasserdichtem Papier, z.B. Fettpapier, aufgebracht. Hierzu kann die Außenseite 8a der Schicht 8 beispielsweise nach dem Trocknen noch einmal mit einer dünnen, in den Figuren nicht dargestellten, "Klebeschicht" aus dem erfindungsgemäß verwendeten Mehlkleister besprüht werden, um ein Halten der Papierschicht 10 an der Schicht 8 zu erreichen. Alternativ kann diese zusätzliche Schicht auch vor dem zweiten Pressvorgang oder vor dem Trocknungsvorgang auf die Schicht 8 aus Mehlkleister aufgebracht werden.

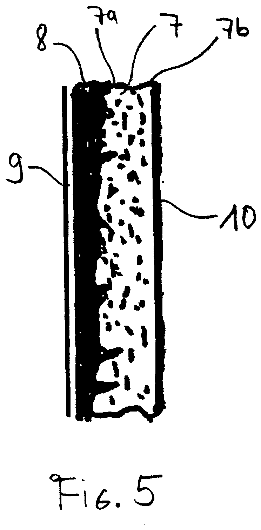

Figur 5 zeigt im schematischen Schnitt die sandwichartige Form des auf diese Weise erzeugten Behälters mit dem aus dem Pflanzenbrei 6 erzeugten Formling 7, die auf dessen Innenseite 7a angeordnete Schicht 8 aus Mehlkleister und Papierschicht 10, sowie die auf der Außenseite 7b des Formlings angeordnete Kleisterschicht 9.

### Bezugszeichenliste

- 1: Formwerkzeug
- 2: Oberes Sieb
- 2b: Außenseite von 2
- 3: Unteres Sieb
- 3a: Innenseite von 3
- 3b: Außenseite von 3
- 4: Sieböffnungen von 2
- 5: Sieböffnungen von 3
- 6: Pflanzenbrei
- 7: Behälterformling
- 7a: Innenseite von 7
- 7b: Außenseite von 7
- 8: Kleisterschicht auf 7a
- 9: Kleisterschicht auf 7b
- 10: Papierschicht auf 8

## Patentansprüche

1. Verfahren zur Herstellung eines kompostierbaren Behälters, umfassend die folgenden Schritte:
a) Zerkleinerung pflanzlicher Abfälle,
b) Versetzen der zerkleinerten Abfälle mit Wasser,
c) Erhitzen des Gemisches zum Erhalten eines Pflanzenbreis (6),
d) Einbringen des Pflanzenbreis (6) in ein Formwerkzeug (1,2,3),
e) Formpressen des Pflanzenbreis (6) zum Erhalten eines Behälterformlings (7),
f) Flächiges Auftragen eines flüssigen Mehlkleisters (8) auf die innenliegende Seite (7a) des Behälterformlings (7),
g) Erneutes Formpressen des mit der Mehlkleisterschicht (8) überzogenen Behälterformlings (7),
h) Trocknen des Behälterformlings (7) und der Mehlkleisterschicht (8).

2. Verfahren nach Anspruch 1, **dadurch gekennzeichnet, dass** der Behälterformling (7) nach Schritt e) angetrocknet wird.

3. Verfahren nach Anspruch 1 oder Anspruch 2, **dadurch gekennzeichnet, dass**
im Schritt f) auch die außenliegende Seite (7b) des Behälterformlings (7) mit Mehlkleister (9), insbesondere gefärbtem Mehlkleister (9), beschichtet wird oder die außenliegende Seite (7b) des Behälterformlings (7) nach dem Trocknungsschritt h) mit Mehlkleister (9), insbesondere gefärbtem Mehlkleister (9), beschichtet wird.

4. Verfahren nach einem der vorhergehenden Ansprüche, **dadurch gekennzeichnet, dass**
die innenliegende (7a) und/oder außenliegende (7b) Seite des Behälterformlings (7) während oder nach dem Verfahrensschritten f) und g) mit wenigstens einer zusätzlichen Schicht (10) eines Trennmaterials überzogen wird.

5. Verfahren nach Anspruch 4, **dadurch gekennzeichnet, dass**
der Behälterformling (7) nach Aufbringen der zusätzlichen Schicht (10) erneut einem Formpressvorgang gefolgt, einem Trocknungsvorgang unterzogen wird.

6. Verfahren nach Anspruch 4 oder 5, **dadurch gekennzeichnet, dass**
das Trennmaterial (10) aus einer wasserabweisenden Papierschicht, trockenen Spänen, trockenem Stroh, Strohpapier, trockener Rinde, trockener Getreidefaser oder einer Schaumschicht aus Maisstängel besteht.

7. Verfahren nach einem der vorhergehenden Ansprüche,
**dadurch gekennzeichnet, dass**
der Mehlkleister (8) aus einer Mischung von trockenem glutenreichen Getreidemehl und Wasser im Volumenverhältnis von 2:1 bis 3:1 besteht.

8. Verfahren nach einem der vorhergehenden Ansprüche,
**dadurch gekennzeichnet, dass**
der Mehlkleister (8) antifungine Mittel bzw. antimykotische Mittel und / oder Lebensmittelkonservierungsstoffe enthält.

9. Kompostierbarer Behälter, der durch ein Verfahren nach einem der Ansprüche 1 ― 8 hergestellt wurde.

## Claims

1. A method of manufacturing a compostable container comprising the following steps:
a) Shredding vegetable waste.
b) Adding water to the shredded waste.
c) Heating the mixture to obtain a plant slurry (6).
d) Placing the vegetable slurry (6) in a mould (1,2,3).
e) Compression moulding of the vegetable slurry (6) to obtain a container moulding (7).
f) Coating a liquid flour paste (8) onto the inner side (7a) of the container moulding (7).
g) Re-moulding of the container moulding (7) coated with the flour paste layer (8).
h) Drying the container moulding (7) and the flour paste layer (8).

2. Method according to claim 1, **characterised in that** the container moulding (7) is dried after step e).

3. Method according to claim 1 or claim 2, **characterised in that** in step f) the outer side (7b) of the container moulding (7) is also coated with flour paste (9), in particular coloured flour paste (9), or the outer side (7b) of the container moulding (7) is coated with flour paste (9), in particular coloured flour paste (9), after drying step h).

4. Process according to one of the preceding claims, **characterised in that** the inside (7a) and/or outside (7b) of the container moulding (7) is coated with at least one additional layer (10) of a release material during or after the process steps f) and g).

5. Process according to claim 4, **characterised in that** after application of the additional layer (10), the container moulding (7) is again subjected to a compression moulding process followed by a drying process.

6. Method according to claim 4 or 5, **characterised in that** the separating material (10) consists of a water-repellent paper layer, dry chips, dry straw, straw paper, dry bark, dry grain fibre or a silage foam layer.

7. Process according to any one of the preceding claims, **characterised in that** the flour paste (8) consists of a mixture of dry gluten-rich cereal flour and water in a volume ratio of 2:1 to 3:1.

8. Process according to any one of the preceding claims, **characterised in that** the flour paste (8) contains antifungal agents, antibacterial agents, and/or food preservatives.

9. Compostable container produced by a process according to any one of claims 1 - 8.

## Revendications

1. Procédure de fabrication d'un récipient compostable comprenant les étapes suivantes:
a) le broyage des déchets végétaux;
b) le mélange avec de l'eau des déchets broyés;
c) chauffage du mélange pour obtenir une bouillie végétale (6);
d) l'incorporation de la bouillie végétale (6) dans un outil de moulage (1,2,3);
e) moulage de la bouillie végétale (6) en vue de l'obtention d'un moule de récipient (7);
f) l'application en surface de la pâte de farine(8) sur la face intérieure (7a) du moule du récipient (7);
g) le nouveau moulage du récipient enduit de la couche de pâte de farine (8) (7);
h) le séchage du moule du récipient (7) et de la couche de pâte de farine (8).

2. Procédé selon la revendication 1, **caractérisé par le fait que**:
le moule du récipient (7) est séché conformément à l'étape e).

3. Procédé selon la revendication 1 ou la revendication 2, **caractérisé en ce que** dans l'étape f), la face extérieure (7b) du moule de récipient (7) est également revêtue de la pâte de farine (9), en particulier de la pâte de farine colorée (9) soit la face extérieure (7b) de moule de récipient (7) est recouverte de pâte de farine (9), en particulier de la pâte de farine colorée (9), après l'étape de séchage h).

4. Procédé selon l'une des revendications précédentes, **caractérisé par le fait que** la face intérieure (7a) et/ou extérieure(7b) du moule de récipient (7) pendant ou après les étapes f) et g) avec au moins une couche supplémentaire (10) est recouverte d'un matériau de séparation.

5. Le procédé selon la revendication 4, **caractérisé par le fait que**
le moule du récipient (7) après application de la couche supplémentaire (10) est à nouveau soumis à une opération de moulage suivie d'une opération de séchage.

6. Procédé selon la revendication 4 ou 5, **caractérisé par**:
le matériel de séparation (10) est constitué d'une couche de papier imperméable à l'eau, de copeaux, de paille sèche, de papier paille, d'écorce sèche, de fibres de céréales sèches ou d'une couche de mousse de silos.

7. Procédé selon des revendications précédentes;
**caractérisé par le fait que** la pâte de farine (8) est constituée d'un mélange de farine de céréales sèches riche en gluten et d'eau dans un rapport de volume de 2:1 à 3:1.

8. Procédé selon l'une des revendications précédentes;
**caractérisé par le fait que** la pâte de farine (8) contient des antifongiques et / ou des conservateurs alimentaires.

9. Récipient compostable produit par un procédé selon l'une des revendications de 1 à 8.
